# EUROPEAN PATENT APPLICATION

(11) **EP 3 021 291 A1**
(43) Date of publication of application: **18.05.2016**
(21) Application number: 15197324.5
(22) Date of filing: 25.02.2005
(51) Int. Cl.: G07C 5/08

(54) **DEVICE FOR RECORDING DRIVE AND JOURNEY DATA OF MOTOR VEHICLES**

(30) Priority: 01.03.2004 IT RM20040106
(62) Divisional of application: 05425099.8
(71) Applicant: Associated Consulting S.p.A., 00173 Roma (RM) (IT)
(72) Inventor: Tommasi, Marcello, 00189 Roma (IT)
(74) Representative: Provvisionato, Paolo

(57) **Abstract**

A device capable of being installed on various types of vehicles is capable of collecting drive data and of recording such data into non-volatile electronic memories. The driver identity data is contained in a removable memory associated to the driver to determine whether the driver may be authorized to drive the specific vehicle where the device is installed. In a method for collecting drive data from various types of vehicles and recording such data into non-volatile electronic memories, it is determined whether the driver may be authorized to drive a specific vehicle. Data are saved at regular intervals into the electronic non-volatile memories. The data being about the driven distances, the corresponding time intervals and the current geographical position of the vehicle.

## Description

### The invention in general terms

The invention has the purpose of providing devices capable of recording into non-volatile electronic memories respectively associated to Vehicles and Drivers, data regarding journeys driven by various drivers on various vehicles. The recorded data will be aggregated by "drive periods" being a single "drive period" the time interval corresponding to a single trip, identified by the switching on and off of the vehicle engine.

The electronic memories associated to Drivers shall be implemented as removable units while the electronic memories associated to Vehicles may either be part of the device itself or be a removable unit as well.

For each drive period the device will record and save to the Vehicle and to the Driver electronic memories the start time and duration of the trip, the vehicle and driver identities and the overall distance driven. The device will also record and save on both memories either the overall time driven at speeds within pre-defined speed ranges (e.g. 5 predefined speed ranges) or the distance driven and the vehicle geographical position at the end of consecutive time intervals (e.g. 60 seconds time intervals) during the same drive period. In the latter case the vehicle geographical position shall be provided by an external source by means of an input signal.

The data recorded in the removable DRK memory could be made available for further processing by inserting the same Driver Key DRK into an appropriate reader connected to a Personal Computer. The data recorded in the vehicle electronic memory VHK could be downloaded from the VHK memory to a removable download key and then could be made available for further processing by inserting this download key into an appropriate reader connected to a Personal Computer, being the reader and the PC not part of the present invention. The data stored by the device into the VHK and DRK electronic memories are saved in data records each containing a "security code" which will prevent any tampering action on the data.

The invention regards a device capable of being installed on various types of vehicles which is capable of collecting from the vehicle itself and from appropriate external units all the relevant drive data and of recording such data into the non-volatile electronic memories respectively associated to Vehicles and Drivers according to the above described philosophy

The device will be capable of reading the driver identity data contained in the removable memory associated to the driver and to determine whether the driver may be authorized to drive the specific vehicle where the device is installed. The above decision shall be based on the analysis of the driver data stored inside his/her own removable memory (also identified as Driver Key - DRK) compared with the vehicle data stored inside its own memory (also identified as Vehicle Key - VHK). Should the decision lead not to authorize the Driver for the specific Vehicle, the device shall issue a visual (RED light) and an electrical signal, denying the Driver from activating the Vehicle engine. Should the decision lead to authorize the Driver for the specific Vehicle, the device shall issue a visual (GREEN light) and an electrical signal, permitting the Driver to activate the Vehicle engine. Should the analysis of the Vehicle and the Driver data detect a situation requiring the "attention" of the Driver, the device shall issue a visual (YELLOW light) still permitting the Driver to activate the Vehicle engine.

Once an authorized Driver has activated the vehicle engine, the device will continuously monitor the Driver's activity and will continuously evaluate the driven distance and the current vehicle speed by appropriately processing the electrical pulses coming from an external odometer. The device will also continuously monitor the vehicle geographical location by receiving and saving the geographical coordinates coming from an external GPS receiver. The device will save at regular intervals into the two electronic non-volatile memories associated with the Vehicle and the Driver, the data about the driven distances, the corresponding time intervals and the current geographical position of the vehicle.

Each time e new data is written into one of the electronic non-volatile memories the device will calculate and save together with the written data also an appropriate "security code" which will prevent any possible tampering action on the stored data.

The device will incorporate a Real Time Clock unit with internal battery back-up which will be capable of providing current date and time data and which will keep its functionality even in case of relatively long periods of inactivity of the device. The device will also incorporate a manually activated micro-switch which, if activated, will force the device to execute a restart cycle.

### State of the art

At the current state of the art different types of devices are available on the market which are capable of continuously recording on electronic, magnetic or paper support the information about the driven time period and the vehicle speed and drive distances.

In particular most truck and heavy vehicles are normally equipped with tachimetric instruments capable of producing a paper circular diagram showing the current speed vs the current time. However such devices are mainly focused on the control and verification of the driving times and speed regulations for heavy load drivers and are non well suited for light private vehicles both from the cost and from the size point of view.

As far as we know, no device exist at the moment on the marker that is capable of recording both trip data plus driver and vehicle identities on non volatile memory units, that is capable of verifying the authorization of a Driver with respect to a specific vehicle and that is capable of recording the vehicle speed and the vehicle geographical positions in the way the invention is currently doing.

In particular the device which the invention refers to, has been conceived for low cost, large diffusion on lightweight vehicles as well as on heavy vehicles and is specifically aimed to the automatic documentation of the time periods driven by various drivers on various vehicles and on the documentation of the drivers behaviour as far as the driving speed is concerned.

The device, consequently, may be classified as a new found that improves and broadens the functionalities of known devices and that introduces innovative solutions by means of a new combination of known techniques in order to get functionalities not otherwise achievable by known devices.

### Detailed description of currently preferred implementation solutions

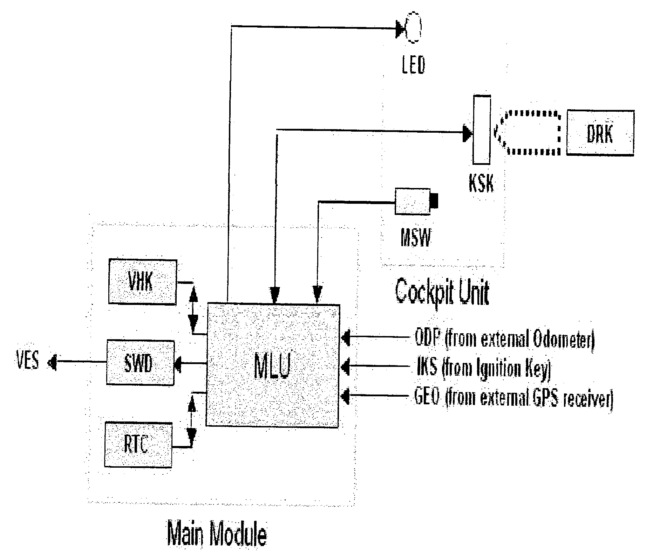

The invention is now described with reference to a specific implementation solution which is currently preferred, being this description reported as one of the possible examples of implementation, with no meaning whatsoever of limiting the application or the realization of the invention to the described solution and application. The invention is then described with reference to the implementation scheme described in Figure 1, which shows an example of the device for recording drive and journey data of motor vehicles.

In Figure 1, the following elements can be seen:
1. MLU - Main Logical Unit, part of the Main Module performing the logical functions of the device.
2. VHK - Non volatile electronic memory Vehicle Key, part of the Main Module.
3. SWD - Switching Device, part of the Main Module; the SWD performs on/off switching of the electrical signal enabling the operation of the vehicle where the invented device is installed
4. RTC - Real Time Clock unit, part of the Main Module which continuously provides date and time information
5. ODP Signal - Pulse signal from external Odometer
6. IKS Siqnal - Electrical signal form the Ignition Key
7. GEO Signal - Geographic reference signal from external GPS receiver
8. VES Signal - Electrical signal that enables/disables the operation of the vehicle
9. KSK - Socket for the insertion of the Driver's Key, part of the Cockpit Module
10.LED - Multi-colour Light Emitting Diode, used by the MLU to indicate whether the Driver is authorized or not for driving the vehicle
11. MSW - Manual micro-switch used to reset the device if necessary
DRK - Non volatile removable electronic memory Driver Key; to be inserted into the Cockpit Module, by means of the KSK socket, to verify the Driver's authorization for driving the vehicle.

Figure 1 describes the general operating principle of the present invention which, according to Figure 1 and in the implementation solution which is currently preferred, is made of two distinct units named, respectively, "Main Module" and "Cockpit Module" mutually connected by a multi-wire cable. An alternative, also preferred, implementation solution will envisage a single "Unified Cockpit Module" which incorporates in itself all the functionalities of the two modules. Either one of the two solutions may be used for implementing the invention, depending on the preference of the final user and of the characteristics of the target application.

With reference to Figure 1, the operation of the device may be described as follows.

When the device is first installed on the vehicle, it shall be appropriately programmed as to store into the non volatile electronic memory VHK: i) a unique vehicle identity code" VC, ii) one or more "mode selection codes", iii) an "odometric constant" OC, iv) a unique "secret code" RV.

When Driver Keys DRKs are first generated, they shall be appropriately programmed as to store into their non volatile electronic memory: i) a unique driver identity code DC, ii) one or more "mode selection codes", iii) a unique "secret code" DV.

Special "Download Keys", mechanically similar to keys DRK, may be generated if necessary; they shall be programmed as to store into their non volatile electronic memory: i) a special "download code" RC which, at insertion, will be recognized by the device

Special "Upload Keys", mechanically similar to keys DRK, may be generated if necessary; they shall be programmed as to store into their non volatile electronic memory: i) a special "upload code" WC which, at insertion, will be recognized by the device, ii) the unique "vehicle code" VC of the vehicle the upload key is intended made for, iii) the "mode selection codes" for the target vehicle, iv) the "odometric constant" OC for the target vehicle, v) the unique "secret code" RV for the target vehicle.

At every "reset" of the device, which will occur both when either the electrical signal IGK or the micro-switch MSW are activated, MLU will be ready for recording the data of a new "drive interval". If no Driver Key is inserted into the Cockpit Module, MLU will activate the LED indicator with a RED flashing light and will activate the SWD switching device as to generate a "FALSE" Vehicle Enabling Signal VES. The above VES signal will inhibit the ignition of the vehicle engine and, consequently, will prevent the Driver from driving the vehicle.

If the Driver Key belonging to a not-authorized Driver is inserted into the Cockpit Module of the device, MLC will read the codes stored in the electronic memory and, after having recognized that the driver is not authorized, will activate the LED indicator with a RED light and will activate the SWD switching device as to generate a "FALSE" Vehicle Enabling Signal VES. The above VES signal will inhibit the ignition of the vehicle engine and, consequently, will prevent the Driver from driving the vehicle.

If the Driver Key belonging to an authorized Driver is inserted into the Cockpit Module of the device, MLC will read the codes stored in the electronic memory and, after having recognized that the driver is authorized, will activate the LED indicator with a GREEN light and will de-activate the SWD switching device as to generate a "TRUE" Vehicle Enabling Signal VES.

If a "Download Key" is inserted into the Cockpit Module of the device, MLC will read the codes stored in the electronic memory and, after having recognized the type of key, will shortly activate the LED indicator with a RED light, will activate the SWD switching device as to generate a "FALSE" Vehicle Enabling Signal VES and will transfer the entire content of the non volatile electronic memory VHK into the memory of the inserted key. At the end of the transfer process MLU will shortly activate the LED indicator with a GREEN light.

If an "Upload Key" is inserted into the Cockpit Module of the device, MLC will read the codes stored in the electronic memory and, after having recognized the type of key, will shortly activate the LED indicator with a RED light, will activate the SWD switching device as to generate a "FALSE" Vehicle Enabling Signal VES and will initialize the entire content of the non volatile electronic memory VHK with the data previously stored in the memory of the inserted upload key. At the end of the transfer process MLU will shortly activate the LED indicator with a GREEN light.

After a Driver Key belonging to an authorized Driver (inserted in the Cockpit Module) has been recognized, MLC will start recording new "drive records" both in the Vehicle electronic memory and in the DRK electronic memory: the "drive record" on the vehicle memory will be initialized by writing the Driver's identity code DC and the current date and time stamp while the "drive record" on the DRK memory will be initialized by writing the Vehicle's identity code VC and the current date and time stamp.

Every time a record is written on the vehicle non volatile memory, an "authentication code" VH will be calculated and written at the end of the record data by using the driver's secret code RD. Every time a record is written on the DRK non volatile memory, an "authentication code" DH will be calculated and written at the end of the record data by using the vehicle's secret code RV. The above authentication codes DH and VH will prevent possible tampering of the stored records.

MLU will continuously count and accumulate the "odometric pulses" received by means of the ODP signal. At the end of each 60 second time interval, MLU will evaluate the driven distance in km, by dividing the total number of ODP pulses by the "odometric constant" previously stored in the VHK electronic memory.

Every 60 seconds MLU will compare the number of received ODP pulses with the speed ranges previously stored in the vehicle memory (part of the "mode selection codes"). Once the driven speed has been classified into one of the defined speed ranges, the time counter corresponding to the speed range will be incremented by one.

Every T seconds (where T may be 60 seconds or 300 seconds or any other constant interval) MLU will update both the vehicle memory and the DRK memory. According to the selected operating mode the update will consist of the two alternatives described below.

As a first alternative the current record will be updated by over-writing: i) the difference in minutes between the current time and the time stamp originally in the record, ii) the total driven distance, iii) the minutes driven in each speed range, iv) the authentication codes DH and VH as appropriate.

As a second alternative the current record will be updated by appending: i) the driven distance during the last time interval, ii) the current vehicle position (Lat and Long coordinates), iii) the authentication codes DH and VH as appropriate.

As a third alternative the current record will be updated by appending: i) the driven distance during the last time interval, ii) the difference between the current vehicle position (Lat and Long coordinates) and the first position in the record, iii) the authentication codes DH and VH as appropriate.

As a fourth alternative the current record will be updated by appending: i) the driven distance during the last time interval, ii) the authentication codes DH and VH as appropriate.

If the current Driver Key DRK is removed from the Cockpit Module, the data recording will be stopped and MLU will activate the LED indicator with a RED flashing light and will activate the SWD switching device as to generate a "FALSE" Vehicle Enabling Signal VES.

If the Ignition Key Signal is switched off (being the driver Key DRK still inserted in the Cockpit Module) the data recording will be stopped and MLU will activate the LED indicator with a RED flashing light and will activate the SWD switch-ing device as to generate a "FALSE" Vehicle Enabling Signal VES.

In the currently preferred implementation solution the Main Module will be realized as to be easily installed inside the engine hood whereas the Cockpit Module will be realized as to be easily installed in the inside of the vehicle within reach of the driver and being the two Modules interconnected by means of a multi-wire cable terminated by plugs which will mate corresponding sockets provided on the two Modules.

In a second preferred implementation solution the functions currently envisaged for the Main Module and for the Cockpit Module are performed by a single Combined Cockpit Module.

In a third preferred implementation solution the Main Module will be realized as to be easily installed inside the engine hood whereas the Cockpit Module will be realized as to be easily installed in the inside of the vehicle within reach of the driver and being the two Modules interconnected by means of a wireless communication link, where the above link may be realized by means of a radio frequency link or by means of an infrared optical link.

According to a specific aspect, it is disclosed a device for recording drive and journey data of motor vehicles composed of a Main Logical Unit (MLU) which could read, through a Key Socket (KSK), a temporarily inserted non volatile electronic memory used as Driver Key (DRK). The Main Logical Unit (MLU) could compare the content of the above DRK with the content of a second non volatile electronic memory used as Vehicle Key (VHK). The Main Logical Unit (MLU) is capable, according to the result of such comparison, of activating both a Switching Device (SWD), and a multi-colour LED indicator showing the result of the comparison. The Switching Device (SWD) will generate an electric signal VES (Vehicle Enabling Signal) enabling the operation of the vehicle.

The Main Logical Unit (MLU) is capable of reading an Odometric Pulse Signal (OPS) generated by an external odometer and to transform such OPS pulses into the corresponding travelled distance and speed. The Main Logical Unit (MLU)is capable of reading the status of a Microswitch (MSW) and, according to its status, of executing a restart function. The Main Logical Unit (MLU) is capable of recording onto the above DRK the identity code of the vehicle and onto the above VHK the identity code of the driver as read from the currently inserted DRK. The Main Logical Unit (MLU) is capable of reading from a Real Time Clock (RTC) the current date and time.

The Main Logical Unit (MLU) is capable of detecting when the DRK key was inserted and extracted. The Main Logical Unit (MLU) is capable of detecting the activation and dis-activation of the Ignition Key Signal (IKS). The Main Logical Unit (MLU) is capable of simultaneously recording on both electronic memories DRK and VHK the date and time data corresponding to the instants when the DRK key was respectively inserted and extracted or the instants when the IKS was respectively activated or dis-activated. The Main Logical Unit (MLU) is capable of simultaneously recording on both electronic memories DRK and VHK either the overall distance travelled in a driving period or the distances travelled and the current geographic position of the vehicle at the end of consecutive time intervals of predefined duration T. The geographical position data are received from an external device and are provided to MLU by means of the GEO information signal. The Main Logical Unit (MLU) is capable of recording the above data on both electronic memories DRK and VHK together with a security check code which would prevent tampering of the recorded data. The Main Logical Unit (MLU) is capable of recognizing specially coded DRK keys. The Main Logical Unit (MLU) is capable of reacting to the insertion of such keys either by downloading the current content of the VHK memory into selected areas of the VHK memory, according to the specific coding of the inserted keys.

The above device can be composed of a Main Module and of a Cockpit Module. The two above Modules can be interconnected by means of a multi-wire cable. The Main Module can be made in a case suitable for installation in the hood of a motor vehicle. The Cockpit Module can be made in a case suitable for installation in the inside of a motor vehicle.

The device can use a removable memory module implemented by means of a solid state electrically alterable electronic memory. The electrical read and write signals can be provided to the removable memory module through the electrical contacts between the removable module itself and the KSK socket of the device.

The device can use a removable memory module implemented by means of a solid state electrically alterable electronic memory. The electrical read and write signals can be provided to the removable memory module through the wireless transmission of electromagnetic energy by means of electromagnetic air coupling between the device and the removable memory module.

The device can use the same removable memory module used as Driver Key for the upload of preset values and parameters into the VHK memory of the device.

The device can calculate driven distances and driven speeds by the real time processing of odometric pulses generated by the motion of the vehicle. The coefficients needed for the above processing can be stored in the VHK memory and function of the specific vehicle.

The device can use drive records associated to individual drive periods containing the driver identification code, the start date and time stamp, the drive period length, the total driven distance, the total time driven at speeds in predetermined speed ranges. The above records can be stored into the vehicle VHK memory.

The device can use drive records associated to individual drive periods containing the vehicle identification code, the start date and time stamp, the drive period length, the total driven distance, the total time driven at speeds in predetermined speed ranges. The above records can be stored into the driver DRK memory.

The device can use drive records associated to individual drive periods containing the driver identification code, the start date and time stamp, a collection of sub-records reporting the driven distances during consecutive, equal time intervals up to the end of the drive period. The above records can be stored into the vehicle VHK memory.

The device can use drive records associated to individual drive periods containing the vehicle identification code, the start date and time stamp, a collection of sub-records reporting the driven distances during consecutive, equal time intervals up to the end of the drive period. The above records can be stored into the driver DRK memory.

The device can use drive records associated to individual drive periods containing the driver identification code, the start date and time stamp, the initial position of the vehicle expressed as geographical coordinates, a collection of sub-records each reporting the driven distances and the position of the vehicle at the end of consecutive, equally spaced time intervals up to the end of the drive period. The above records can be stored into the vehicle VHK memory. Such geographical coordinates can be supplied by an external device.

The device can use drive records associated to individual drive periods containing the vehicle identification code, the start date and time stamp, the initial position of the vehicle expressed as geographical coordinates, a collection of sub-records each reporting the driven distances and the position of the vehicle at the end of consecutive, equally spaced time intervals up to the end of the drive period. The above records can be stored into the driver DRK memory. Such geographical coordinates can be supplied by an external device.

The device can protect the records stored into the vehicle VHK memory against possible tampering by providing, for each record, an authentication check code generated by means of a unique secret code stored inside the driver DRK memory.

The device can protect the records stored into the driver DRK memory against possible tampering by providing, for each record, an authentication check code generated by means of a unique secret code stored inside the vehicle VHK memory.

The device can use the result of the comparison between the codes contained inside the vehicle VHK memory and the driver DRK memory to enable the vehicle operation. Such comparison can be made by detecting any common code contained in both memories. The vehicle operation can be enabled only if such common codes do exist.

The device can use the result of the comparison between the codes contained inside the vehicle VHK memory and the driver DRK memory to disable the vehicle operation. Such comparison can be made by detecting if the driver identification code belongs to a list of blacklisted codes contained in the vehicle VHK memory.

The device can have the functions of the two Modules, namely Main Module and Cockpit Module, combined into one module.

The device can have the functions of the Cockpit Module performed by a module which is capable of exchanging data with the Main Module by means of a wireless connection. Such connection can be implemented by means of a radio frequency link.

The device can have the functions of the Cockpit Module performed by a module which is capable of exchanging data with the Main Module by means of a wireless connection. Such connection can be implemented by means of an optical link.

## Claims

1. Device capable of being installed on various types of vehicles, which is capable of collecting drive data and of recording such data into non-volatile electronic memories, wherein the driver identity data is contained in a removable memory associated to the driver to determine whether the driver may be authorized to drive the specific vehicle where the device is installed.

2. Device according to claim 1, wherein at regular intervals data are saved into the two electronic non-volatile memories associated with the vehicle and the driver, the data being about the driven distances, the corresponding time intervals and the current geographical position of the vehicle.

3. Device according to claim 1 or 2, wherein each time new data is written into one of the electronic non-volatile memories, the device will calculate and save together with the written data also a security code which will prevent any possible tampering action on the stored data.

4. Device according to any one of claims 1 to 3, wherein the device is adapted for recording both trip data plus driver and vehicle identities on non-volatile memory units.

5. Device according to any one of claims 1 to 4, wherein after a driver key belonging to an authorized driver has been recognized, a Main Logical Unit will start recording new drive records both in a vehicle electronic memory and in a driver electronic memory.

6. Device according to any one of claims 1 to 5, wherein drive record on a vehicle memory are initialized by writing a driver's identity code and the current date and time stamp.

7. Device according to any one of claims 1 to 6, wherein drive record on a driver memory will be initialized by writing a vehicle's identity code and the current date and time stamp.

8. Device according to any one of the preceding claims, the device being adapted to protect the records stored into a vehicle memory against possible tampering by providing, for each record, an authentication check code generated by means of a unique secret code.

9. Device according to any one of the preceding claims, comprising a cockpit module which can be installed in the inside of the vehicle within reach of the driver.

10. Device according to any one of the preceding claims, the device using a removable memory module implemented by means of a solid state electrically alterable electronic memory, electrical read and write signals being provided to the removable memory module through the wireless transmission of electromagnetic energy by means of electromagnetic air coupling between the device and the removable memory module.

11. A method for collecting drive data from various types of vehicles and recording such data into non-volatile electronic memories, comprising the steps of determining whether the driver may be authorized to drive a specific vehicle, and saving at regular intervals data into the electronic non-volatile memories, the data being about the driven distances, the corresponding time intervals and the current geographical position of the vehicle.

12. A method according to claim 11, wherein each time new data is written into one of the electronic non-volatile memories, a security code is calculated and saved together with the written data to prevent any possible tampering action on the stored data.

13. A method according to claim 11 or 12, comprising the step of recording both trip data plus driver and vehicle identities on non-volatile memory units.

14. A method according to any one of claims 11 to 13, where the records stored into a vehicle memory are protected against possible tampering by providing, for each record, an authentication check code generated by means of a unique secret code.

15. A method according to any one of claims 11 to 14, electrical read and write signals being provided to a removable memory module through the wireless transmission of electromagnetic energy by means of electromagnetic air coupling between the device and the removable memory module.
